# EUROPÄISCHE PATENTANMELDUNG

(11) **EP 1 374 739 A2**
(43) Veröffentlichungstag der Anmeldung: **02.01.2004**
(21) Anmeldenummer: 03450117.1
(22) Anmeldetag: 14.05.2003
(51) Int. Cl.: A47C 7/46, B60N 2/66

(54) **Konturverstellbarer Sitz und Modulträger**

(30) Priorität: 18.06.2002 AT 9182002
(71) Anmelder: HYGRAMA AG, 6304 Zug (CH)
(72) Erfinder: Dörfler, Erich, Dipl.-Ing, 86899 Landsberg-Erpfting (DE); Russ, Bernhard, 86971 Peiting (DE)
(74) Vertreter: Laminger, Norbert, Mag.

(57) **Zusammenfassung**

Ein konturverstellbarer Sitz, insbesondere Fahrzeug- oder Flugzeugsitz, weist eine Rückenlehne (2) und allenfalls seitliche Stützteile (4) auf, in welchen mit Luft oder Gas befüllbare Kissen (5a, 5b, 5c) auf einem gemeinsamen, flexiblen Modulträger (M), allenfalls als separater Bauteil ausgeführt, vorgesehen sind, welcher Modulträger (M) eine gemeinsame Wandung für die Kissen darstellt, welche über je eine mit einem ansteuerbaren Ventil versehene Leitung mit einer Druckluft- oder Druckgas-Quelle verbunden sind, wobei jedes Ventil über eine Steuerleitung mit einer Steuereinheit für den Luft- oder Gasdruck verbunden ist und wobei für jedes Kissen ein Drucksensor vorgesehen ist.

Um ein sowohl beim Zusammenbau des Sitzes einfacheres als auch für eine allfällige Nachrüstung bestehender Sitze gut geeignetes System zu finden, das in weiterer Folge auch weniger Raum beansprucht und leichter ist als herkömmliche Systeme, sind weitere Bauteile des Konturverstellungssystems, beispielsweise die Ventile (10) für die Kissen und/oder die Drucksensoren, im Modulträger (M) integriert.

## Beschreibung

Die Erfindung betrifft einen konturverstellbaren Sitz, insbesondere Fahrzeug- oder Flugzeugsitz, mit einer Rückenlehne und allenfalls seitlichen Stützteilen, in welchen mit Luft oder Gas befüllbare Kissen auf einem gemeinsamen, flexiblen Modulträger, allenfalls als separater Bauteil ausgeführt, vorgesehen sind, welcher Modulträger eine gemeinsame Wandung für die Kissen darstellt, welche über je eine mit einem ansteuerbaren Ventil versehene Leitung mit einer Druckluft- oder Druckgas-Quelle verbunden sind, wobei jedes Ventil über eine Steuerleitung mit einer Steuereinheit für den Luft- oder Gasdruck verbunden ist, und wobei für jedes Kissen ein Drucksensor vorgesehen ist, sowie einen Modulträger für einen derartigen Sitz, mit einem Rückenabschnitt und allenfalls seitlichen Stützabschnitten, an oder auf welchem Modulträger mit Luft oder Gas befüllbare Kissen vorgesehen sind.

Es ist bekannt, in speziell der Rückenlehne von Sitzen ein oder mehrere mit Luft oder anderen Gasen befüllbare Kissen vorzusehen, um damit eine Anpassung der Form des Sitzes zu erreichen. Damit ist ein über längere Zeiten ermüdungsfreies, bequemes Sitzen möglich, im Fall von Kraftfahrzeugsitzen auch ein über längere Zeiten ermüdungsfreies, bequemes Fahren sowie - im Fall von vorhandenen seitlichen Stützteilen - auch ein verbesserter Halt bei Kurvenfahrt. Bislang werden die einzelnen Kissen in aufwendiger Weise separat in den Sitz eingebaut und jedes Kissen mit einer Druckluftversorgung und einer Druckregelung verbunden, wie dies beispielsweise in der DE 38 04 959 C2 beschrieben ist. Die Luftkammern im Sitz werden durch ein beispielsweise unterhalb des Sitzes angeordnetes Steuergerät mit einer Anzahl von Magnetventilen und von dort zu den Kammern führenden Luftleitungen versorgt. Das Steuergerät enthält auch die Drucksensorik. Ein ähnliches System ist auch in der EP 1 072 465 A2 geoffenbart. Dieser externe Ventil- und Steuerblock ist relativ schwer, benötigt einigen Bauraum und aufgrund der Bauart des Sitzes mit separaten Kissen weisen diese eine ungünstige bauchige Form auf.

Auf einem gemeinsamen Träger vorgesehene, mit Gas oder Luft befüllbare Kissen sind unter anderem in der DE 41 06 862 A1, der DE 41 06 863 A1, der US 3 326 601 A und der DE 37 35 428 A2 beschrieben. Die bei diesen Konstruktionen vorgesehenen Modulträger bilden auch für mehrere Kissen eine gemeinsame Wandung.

Es war daher die Aufgabe der vorliegenden Erfindung ein sowohl beim Zusammenbau des Sitzes einfacheres als auch für eine allfällige Nachrüstung bestehender Sitze gut geeignetes System zu finden, das in weiterer Folge auch weniger Raum beansprucht und leichter ist als die herkömmlichen Systeme.

Zur Lösung dieser Aufgabe ist ein Sitz wie eingangs beschrieben erfindungsgemäß dadurch gekennzeichnet, daß weitere Bauteile für das Konturverstellungssystem, beispielsweise die Ventile für die Kissen und/oder die Drucksensoren, im Modulträger, integriert sind. Damit können bei in einfacher und zeitsparender Weise gemeinsam eingebauten Kissen, deren gegenseitige Lage zueinander festgelegt ist und bei welchen keine nachteiligen Verschiebungen oder Fehler beim Einbau geschehen können, weitere Vereinfachungen punkto Auf- und Zusammenbau und auch Verbesserungen bezüglich des benötigen Bauraumes erzielt werden.

Die erfindungsgemäße Aufgabenstellung wird auch durch einen Modulträger für die luftbefüllbaren Kissen gelöst, welcher dadurch gekennzeichnet ist, daß die Kissen auf einer gemeinsamen, flexiblen Folie vorgesehen sind, welcher Folie eine gemeinsame Wandung für die Kissen darstellt.

Vorzugsweise sind dabei die Kissen durch Blasen zwischen zwei miteinander verbundenen, vorzugsweise verschweißten Folien gebildet, wodurch in einfacher Weise die Form und Ausdehnung der Luftkissen - auch abweichend von der üblichen bauchigen Form - bestimmbar sind.

Gemäß einer vorteilhaften Ausführungsform der Erfindung ist weiters vorgesehen, daß die Leitungen zu den Kissen ebenfalls durch Ausnehmungen in der Verbindung der beiden Folien gebildet sind. Damit vereinfacht sich Herstellung und Ein- als auch Zusammenbau noch weiter, da beispielsweise die notwendigen Leitungen für die Luft bzw. das Füllgas automatisch richtig angeschlossen sind.

Vorzugsweise ist dabei vorgesehen, daß die Leitung zu den Kissen von einer gemeinsamen Anschlußstelle am Modulträger ausgehen. Damit ist lediglich ein einziger Druckluft- oder -gas-Anschluß am Modulträger und damit am Sitz vorzusehen.

Wenn gemäß einem weiteren Merkmal der Erfindung auch noch die Ventile für die Kissen am Modulträger angebracht sind, kann jeglicher Aufwand für eine externe Ventilbaugruppe vermieden und der notwendige Bauraum weiter vermindert werden. Auch können Irrtümer beim Anschließen der Leitungen vermieden werden.

Vorzugsweise sind dabei die Ventile zwischen den Folien eingeschweißt, damit in den Modulträger geschützt integriert, wodurch auch die Gefahr gebannt ist, dass sich Verbindungen zwischen Ventilen und Leitungen unbeabsichtigt lösen können.

Ein weiterer Vorteil in bezug auf den vereinfachten Zusammen- und Einbau ist dadurch zu erreichen, daß Drucksensoren für die Kissen am Modulträger angebracht sind. Damit ist auch für diesen Bereich ein externes Steuergerät vermeidbar oder zumindest mit bedeutend kleineren Dimensionen auslegbar.

Auch hier ist der Vorteil des Schutzes der Bauteile und der weitestgehend unlösbaren Verbindungen zu realisieren, wenn die Drucksensoren zwischen den Folien eingeschweißt sind.

Den geringsten Bauraum beansprucht der Modulträger, wenn er gemäß einem weiteren Merkmal der Erfindung derart aufgebaut ist, daß die Drucksensoren in die Ventile integriert sind.

Vorteilhafterweise ist dabei vorgesehen, daß die Ventile als Piezoventile ausgeführt sind, womit sich besonders schnell und exakt schaltende Ventile mit geringen Abmessungen realisieren lassen.

In der nachfolgenden Beschreibung soll die Erfindung anhand eines bevorzugten Ausführungsbeispiels unter Bezugnahme auf die beigefügten Zeichnungen näher erläutert werden.

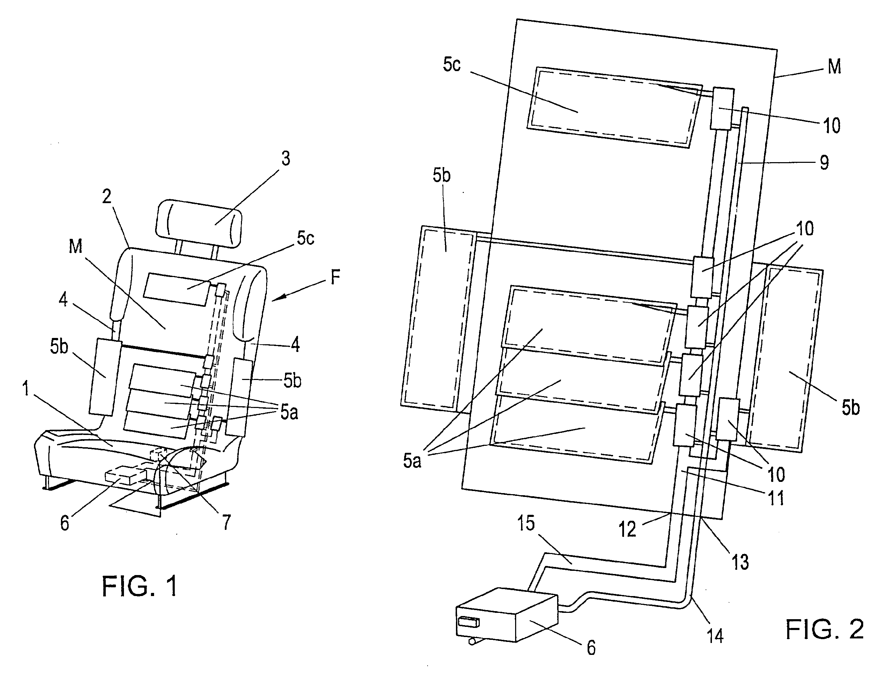

Dabei zeigt die Fig. 1 als spezielles Ausführungsbeispiel einen Sitz für ein Kraftfahrzeug, der mit einem erfindungsgemäßen Modulträger mit luftbefüllbaren Kissen ausgestattet ist, und Fig. 2 ist eine größere Ansicht des Modulträgers selbst.

In Fig. 1 ist ein Fahrzeugsitz F dargestellt, der eine Sitzfläche 1, eine Rückenlehne 2 und eine Kopfstütze 3 aufweist. An der Rückenlehne 2 können seitliche Stützen 4 vorgesehen sein, um verbesserten Seitenhalt insbesonders bei Kurvenfahrt zu geben. Der Sitz F weist darüberhinaus ein pneumatisches System auf, um die Rückenkontur verändern zu können. Dazu sind mehrere luftbefüllbare Kissen 5a, 5b, 5c vorgesehen, von welchen beispielsweise drei Kissen 5a im Lordosebereich unmittelbar oberhalb der Sitzfläche 1 angeordnet sind. Auch in den seitlichen Stützen 4 des Sitzes F können Kissen 5b zur weiteren Verbesserung bzw. zum Anpassen des Seitenhaltes vorhanden sein, und auch im oberen Bereich der Rückenlehne 2 ist noch ein weiteres Kissen 5c vorhanden.

Über eine zentrale pneumatische und elektrisch/elektronische Schnittstelle 6 werden die Kissen 5a, 5b, 5c sowohl mit Druckluft aus einer nicht dargestellten Druckluftquelle als auch die Ventile für die Kissen mit Steuersignalen versorgt. Eine Bedieneinheit 7 gestattet es dem Benützer, die Größe der Kissen 5a, 5b, 5c gemeinsam oder relativ zueinander anzupassen.

Wie nun in Fig. 2 im Detail zu sehen ist, sind die luft- oder gasbefüllbaren Kissen 5a, 5b, 5c als Blasen in einem gemeinsamen Modulträger M ausgebildet, welcher Modulträger M bei der Endmontage oder auch bei einer allfälligen Nachrüstung des Sitzes F als ein Bauteil eingebaut wird.

Die Blasen 5a, 5b, 5c sind durch nicht verschweißte Bereiche zwischen zwei miteinander verbundenen Folien 8, vorzugsweise PU - Folien, gebildet, aus welchen der Modulträger M hergestellt ist. Dazu können unterschiedliche Schweißverfahren verwendet werden. Durch das Verschweißen der Folien 8 miteinander können in dem Modulträger M vergleichbar den Leitungsbahnen auf einer elektronischen Platine zusätzliche Hohlräume geschaffen werden, welche als Luftver- und Entsorgungsleitungen 9 dienen. Die Folien 8 des Modulträgers M sind vorteilhafterweise mit bereichsweise unterschiedlichen Materialstärken ausgeführt, wodurch die Form und Ausbildung der Blasen 5a, 5b, 5c beeinflußbar ist. Weiterhin kann durch mehrere Kammern innerhalb der Blasen 5a, 5b, 5c eine gleichmäßigere Kraftentfaltung unterstützt werden.

Vorteilhafterweise sind zwischen den Folien 8 überdies die Ventile 10, die für die Ansteuerung der Blasen 5a, 5b, 5c erforderlich sind, eingeschweißt und direkt neben diesen Blasen 5a, 5b, 5c befestigt. Entweder auf dem Modulträger M oder wieder zwischen seinen Folien 8 mit eingeschweißt kann ein 11 Flachbandkabel und können diverse Stecker vorgesehen sein, welche die elektrische Versorgung der Ventile 10 gewährleisten. Elektrik und Pneumatik kann dann über jeweils einen gemeinsamen Anschluß 12 für die Elektrik bzw. 13 für die Druckluft mit der Schnittstelle 6 verbunden werden.

Die Ventile 10 am Modulträger M sind vorteilhafterweise als klein bauende und damit einfach in den Modulträger M zu integrierende Piezoventile ausgeführt, mit welchen schnelle und exakte Schaltzeiten möglich sind.

Auch die Drucksensoren sind anstelle wie bisher zusammen mit den Ventilen in einer zentralen Steuerbox nunmehr ebenfalls in den Modulträger M integriert, vorzugsweise unmittelbar in die Ventile 10 integriert. Damit sind, unabhängig wieviele Blasen 5a, 5b, 5c im Sitz F vorhanden sind, nur noch eine pneumatische Ver- und Entsorgungsleitung 14 und eine elektrische Versorgung 15 notwendig. Die Drucksensoren in den Ventilen 10 können dabei sehr einfach ausgeführt sein, wenn die Drucksignale werden in der in die Schnittstelle 6 integrierten elektronischen Schaltung anhand von hinterlegten Kalibrierungsdaten ausgewertet und an die Fahrzeugelektronik weitergegeben werden. Die Kalibrierungsdaten der jeweiligen Ventile 10 werden z.B. bei erster Installation des Systems ermittelt. Hierzu ist lediglich ein hochwertiger Drucksensor in der Schnittstelle 6 vorgesehen, welcher normierte Daten ausgeben kann. Mit dieser Kombination ist es möglich, diese einfachen Drucksensoren in den Ventilen 10, die für sich alleine keine brauchbaren Daten liefern können, zu verwenden. Die Schnittstelle 6 wird, wie auch die Ventile 10, mit der Versorgungsluft gespeist. Bei einem Kalibrierungsvorgang werden alle Ventile 10 geöffnet. Damit stellt sich im System ein konstanter Druck ein. Die Werte der einfachen Sensoren im Modulträger M werden nun mit dem Referenzsensor in der Schnittstelle 6 abgeglichen und die jeweiligen Daten gespeichert.

Selbstverständlich könnte anstelle von nur zwei Folien 8 noch zumindest eine weitere Folien aufgeschweißt werden, so dass zusätzlich Funktionalitäten geboten werden können, beispielsweise entlang etwa des Wirbelsäulen-Bereiches verlaufende, eher punktuelle Massage-Blasen. Vorzugsweise wird die zusätzliche Folie an der Hinterseite des Modulträgers M angebracht.

## Patentansprüche

1. Konturverstellbarer Sitz, insbesondere Fahrzeug- oder Flugzeugsitz, mit einer Rückenlehne (2) und allenfalls seitlichen Stützteilen (4), in welchen mit Luft oder Gas befüllbare Kissen (5a, 5b, 5c) auf einem gemeinsamen, flexiblen Modulträger (M), allenfalls als separater Bauteil ausgeführt, vorgesehen sind, welcher Modulträger (M) eine gemeinsame Wandung für die Kissen darstellt, welche über je eine mit einem ansteuerbaren Ventil versehene Leitung mit einer Druckluft- oder Druckgas-Quelle verbunden sind, wobei jedes Ventil über eine Steuerleitung mit einer Steuereinheit für den Luft- oder Gasdruck verbunden ist, und wobei für jedes Kissen ein Drucksensor vorgesehen ist, **dadurch gekennzeichnet, dass** weitere Bauteile des Konturverstellungssystems, beispielsweise die Ventile (10) für die Kissen und/oder die Drucksensoren, im Modulträger (M) integriert sind.

2. Modulträger für einen konturverstellbaren Sitz, insbesondere Fahrzeug- oder Flugzeugsitz, mit einem Rückenabschnitt und allenfalls seitlichen Stützabschnitten, an oder auf welchem Modulträger mit Luft oder Gas befüllbare Kissen vorgesehen sind, **dadurch gekennzeichnet, daß** die Kissen (5a, 5b, 5c) auf einer gemeinsamen, flexiblen Folie (8) vorgesehen sind, welcher Folie eine gemeinsame Wandung für die Kissen darstellt.

3. Modulträger nach Anspruch 2, **dadurch gekennzeichnet, daß** die Kissen (5a, 5b, 5c) durch Blasen zwischen zwei miteinander verbundenen, vorzugsweise verschweißten Folien (8) gebildet sind.

4. Modulträger nach Anspruch 3, **dadurch gekennzeichnet, daß** die Leitungen (9) zu den Kissen (5a, 5b, 5c) ebenfalls durch Ausnehmungen in der Verbindung der beiden Folien (8) gebildet sind.

5. Modulträger nach einem der Ansprüche 2 bis 4, **dadurch gekennzeichnet, daß** die Leitung (9) zu den Kissen (5a, 5b, 5c) von einer gemeinsamen Anschlußstelle (13) am Modulträger (M) ausgehen.

6. Modulträger nach einem der Ansprüche 2 bis 5, **dadurch gekennzeichnet, daß** die Ventile (10) für die Kissen (5a, 5b, 5c) am Modulträger (M) angebracht sind.

7. Modulträger nach Anspruch 6, **dadurch gekennzeichnet, daß** die Ventile (10) zwischen den Folien (8) eingeschweißt sind.

8. Modulträger nach einem der Ansprüche 2 bis 7, **dadurch gekennzeichnet, daß** Drucksensoren für die Kissen (5a, 5b, 5c) am Modulträger (M) angebracht sind.

9. Modulträger nach Anspruch 8, **dadurch gekennzeichnet, daß** die Drucksensoren zwischen den Folien (8) eingeschweißt sind.

10. Modulträger nach einem der Ansprüche 6 bis 9, **dadurch gekennzeichnet, daß** die Drucksensoren in die Ventile (10) integriert sind.

11. Modulträger nach einem der Ansprüche 6 bis 10, **dadurch gekennzeichnet, daß** die Ventile (10) als Piezoventile ausgeführt sind.
